# FASCICULE DE BREVET EUROPEEN

(11) **EP 3 089 899 B1**
(45) Date de publication et mention de la délivrance du brevet: **02.12.2020**
(21) Numéro de dépôt: 14828484.7
(22) Date de dépôt: 30.12.2014
(51) Int. Cl.: B60T 13/02, B60T 13/58, B60T 13/74, F16D 51/22, F16D 51/24, F16D 51/50, F16D 51/62, F16D 51/66, F16D 65/09, F16D 65/46, F16D 51/68

(54) **ACTIONNEUR ENTRAINE PAR PIGNON A GLISSIERE AXIALE, ET FREIN A TAMBOUR ET DISPOSITIF DE FREINAGE AINSI EQUIPES**
AKTUATOR MIT SCHIENENGESTERUERTER GETREIBE, TROMMELBREMSE UND BREMSANORDNUNG MIT SO EINEM AKTUATOR
ACTUATOR DRIVEN BY A GEAR HAVING AN AXIAL GUIDE RAIL, AND DRUM BRAKE AND BRAKING DEVICE PROVIDED WITH SAME

(30) Priorité: 30.12.2013 FR 1363702
(43) Date de publication de la demande: 09.11.2016
(73) Titulaire: Chassis Brakes International B.V., 5656 AG Eindhoven (NL)
(72) Inventeur: GUIGNON, Cédric, 94510 La Queue en Brie (FR); LUU, Gérard, 93160 Noisy Le Grand (FR); DUPAS, Christophe, 91120 Palaiseau (FR); PASQUET, Thierry, 94700 Vincennes (FR); MOLINARO, Alberto, 93160 Noisy Le Grand (FR)
(74) Mandataire: IPAZ
(86) Numéro de dépôt international: PCT/EP2014/079402
(87) Numéro de publication internationale: WO 2015/101611

(56) Documents cités:
- FR-A1- 2 697 599
- US-A1- 2013 087 422
- US-B2- 8 011 482

## Description

La présente invention se rapporte à un actionneur des segments de freinage d'un frein à tambour de véhicule automobile. Elle concerne également un frein et un dispositif de freinage équipés d'un tel actionneur.

### Etat de la technique

Les freins à tambour sont typiquement utilisés dans les véhicules automobiles afin de réaliser trois types de freinage :
- le freinage de service, qui consiste à ralentir et/ou immobiliser le véhicule, typiquement par l'intermédiaire d'une pédale de freinage ;
- le freinage de stationnement, qui permet d'immobiliser le véhicule à l'arrêt, typiquement par l'intermédiaire d'un frein à main ;
- le freinage de secours, qui consiste à ralentir et/ou immobiliser le véhicule en cas de défaillance du freinage de service, et qui est typiquement assuré par le même dispositif que le freinage de stationnement.

Dans la plupart des véhicules équipés de freins à tambour, il est connu que ces trois types de freinage sont réalisés par le même frein à tambour. Spécifiquement et typiquement, la fonction de freinage de stationnement est assurée par un câble reliant une commande de frein à main situé dans l'habitacle, avec un levier pivotant dans le tambour autour d'une extrémité mobile d'un premier segment de freinage et écartant un second segment de freinage via une biellette de réaction.

L'utilisation d'un frein à tambour ainsi actionné à la main ou sous un effort relativement faible fournit un couple de freinage qui peut être insuffisant pour assurer le freinage de stationnement et surtout le freinage de secours.

Un frein à tambour comprend typiquement un tambour, coaxial avec la roue, et consistant en un cylindre creux solidaire de la pièce à freiner. Des segments de freinage équipés de garnitures de freinage peuvent venir frotter sur la surface intérieure du tambour. Pour un freinage, tandis que des premières extrémités des segments s'appuient tangentiellement à la rotation sur une plaque de butée solidaire d'un plateau immobilisé en rotation, des secondes extrémités des segments sont écartées l'une de l'autre pour appliquer les garnitures contre la face intérieure du tambour. Dès lors, tout mouvement ou effort en rotation de la roue imprime un couple de rotation aux segments, qu'ils transmettent au plateau au moins en partie par cette plaque de butée. En général, les deux segments sont actionnés en leurs deux extrémités d'un même côté, typiquement par un même actionneur hydraulique à double piston et fixé au plateau, dans un mode de fonctionnement appelé « simplex ».

Dans un autre type de frein à tambour, appelé « duo-servo », une biellette flottante assure la transmission de l'effort d'un segment à l'autre segment. En particulier, un actionneur écarte la première extrémité d'un premier segment lequel s'appuie sur le tambour pendant que sa seconde extrémité prend appui, par l'intermédiaire de la biellette flottante, sur la deuxième extrémité du segment, flottante elle aussi. Ainsi, la première extrémité du deuxième segment est la seule à prendre appui sur une plaque de butée. Ce type de frein est nettement plus efficace pour un effort d'actionnement donné, mais présente d'autres inconvénients, notamment car il est plus délicat à ajuster et s'use de façon irrégulière.

Les freins à tambour de type duo-servo sont souvent utilisés exclusivement comme frein de stationnement et de secours, par exemple en utilisant comme tambour l'intérieur de la cloche centrale du disque d'un frein à disque de service, combinaison appelée « drum-in-hat » et décrite dans le document EP 0 416 760.

Un autre type de frein consiste à combiner le type simplex pour réaliser le freinage de service et le type duo-servo pour réaliser le freinage de stationnement et de secours. Dans cet esprit, le document FR 2 697 599 propose d'ajouter un actionneur mécanique à proximité de la plaque de butée. Cet actionneur s'appuie d'un côté sur la première extrémité d'un premier segment et de l'autre sur l'extrémité d'un levier supplémentaire agissant sur l'autre segment.

En outre, il est connu d'activer électriquement les segments de freinage d'un frein à tambour. Ainsi, le document US 8 011 482 décrit un mécanisme dans lequel les segments de freinage sont actionnés par une biellette déplacée en translation par un système vis-écrou qui est actionné en rotation par un engrenage lui-même actionné en rotation par un moteur électrique. Le document EP 2 195 219 présente un système de frein de stationnement dans lequel les segments de frein sont actionnés par un élément fileté déplacé en translation par l'intermédiaire d'une roue entraînée par une vis sans fin solidaire en rotation de l'arbre de sortie d'un moteur électrique.

Le document US2013/087422 propose un frein à tambour un écrou entraîné en rotation par un pignon extérieur. Par sa rotation, l'écrou fait sortir d'un côté une tige de poussée filetée appuyant sur un segment, et appuie de l'autre côté sur l'autre segment.

Un but de la présente invention est de proposer un actionneur motorisé des segments de freinage d'un frein à tambour qui permet des opérations de fabrication et/ou d'assemblage et/ou de maintenance simples et flexibles, et procure un fonctionnement fiable, avec de bonnes performances de puissance dans une bonne compacité, et de réduire ou limiter les coûts de production, en particulier dans le cadre d'un frein à tambour de type duo-servo.

### Exposé de l'invention

L'invention propose un actionneur linéaire de frein à tambour de véhicule, notamment automobile, caractérisé en ce qu'il comporte :
- un ensemble d'actionnement linéaire incluant un système vis-écrou formé par un élément fileté rotatif et un deuxième élément fileté, agencé pour actionner le frein à tambour en écartant l'une de l'autre des premières extrémités des segments de freinage selon une direction d'actionnement, sous l'effet d'un entraînement en rotation de l'élément fileté rotatif vis-à-vis du deuxième élément fileté ;
- une motorisation rotative ;
- un sous-ensemble de transmission entraîné par la motorisation et entraînant en rotation l'élément fileté rotatif par une liaison glissière selon la direction d'actionnement.

Avantageusement, l'ensemble d'actionnement linéaire est renfermé dans un boîtier dans lequel il est mobile en translation, selon la direction d'actionnement, entre deux positions extrêmes dans chacune desquelles il vient en butée par appui d'un épaulement porté par l'ensemble d'actionnement contre une surface portée par ce boîtier.

L'ensemble d'actionnement linéaire fournit ainsi une butée entre les segments et le plateau réalisant un transfert du couple de freinage, qui permet par exemple de le positionner à l'une ou l'autre des extrémités des segments, et de mettre en œuvre de façon combinée plusieurs systèmes de freins à tambour.

Contrairement aux solutions de l'art antérieur utilisant un système à vis sans fin, le choix d'utiliser un engrenage de transmission peut nécessiter des pièces plus nombreuses pour obtenir la démultiplication nécessaire. Pourtant, l'invention propose de ne pas utiliser un tel système de vis sans fin. L'invention procure un bon rendement énergétique de la transmission depuis la motorisation, ce qui permet d'obtenir un effort de serrage plus important ou une vitesse de serrage plus élevée ou d'utiliser une motorisation moins puissante, ou un meilleur compromis entre ces performances. De plus, la liaison glissière permet un coulissement axial de l'ensemble d'actionnement lors de l'écartement des segments de freinage.

Selon l'invention :
- le sous-ensemble de transmission comprend des roues dentées engrenées entre elles et montées pour recevoir le mouvement rotatif de la motorisation par une roue menante et pour entraîner l'élément fileté rotatif par une roue menée portant un alésage axial qui entoure l'élément fileté rotatif, cet alésage portant, sur la surface intérieure de la roue menée, une forme d'entraînement intérieure qui coopère avec une forme d'entraînement extérieure portée par la surface extérieure de l'élément fileté rotatif pour entraîner ce dernier en rotation tout en autorisant entre eux un coulissement en translation selon la direction d'actionnement. Selon des perfectionnements de l'invention :
   - les formes d'entraînement de l'élément fileté rotatif du système vis-écrou et/ou de l'alésage de la roue menée comprennent des cannelures ;
- les formes d'entraînement de l'élément fileté rotatif et/ou de l'alésage de la roue menée, et de préférence les deux, présentent une section transversale à la direction d'actionnement dont le profil s'amincit radialement, notamment de façon trapézoïdale, de façon à exercer sur l'élément fileté rotatif un effort de centrage dans l'alésage lors de la transmission de couple ;

- l'élément fileté rotatif forme l'écrou du système vis-écrou ;
- le sous-ensemble de transmission comprend plusieurs roues dont les axes sont parallèles entre eux et à la direction d'actionnement, et ces roues engrènent entre elles par des dentures à contacts extérieurs ;
- le sous-ensemble de transmission forme un élément pré-assemblé au sein d'une carcasse comprenant deux plaques parallèles entre lesquelles sont maintenues les roues dentées, et qui portent des orifices circulaires accueillant des arbres dépassant des roues dentées pour former des paliers les maintenant radialement en position ;
- l'actionneur comprend un premier boîtier, dit boîtier principal, recevant le système vis-écrou dans un logement d'actionnement, qui intersecte un logement recevant une roue menée située en sortie du sous-ensemble de transmission et entraînant l'élément fileté rotatif, et l'actionneur comprend un deuxième boîtier, dit boîtier secondaire, qui est assemblé avec le boîtier principal de façon à renfermer le sous-ensemble de transmission ;
- l'ensemble d'actionnement linéaire comprend en série avec le système vis-écrou un élément élastiquement déformable, au moins selon la direction d'actionnement, sous l'effet d'un effort d'écartement appliqué aux segments par le système vis-écrou.

La présence d'un sous-ensemble pré-assemblé au sein de l'actionneur simplifie grandement les étapes d'assemblage et de maintenance et contribue ainsi à réduire les coûts de production et de maintenance de façon systématique. Elle permet aussi d'assurer un positionnement plus précis des roues dentées entre elles, ce qui assure un meilleur rendement énergétique et une moindre usure des dentures.

Un autre aspect de l'invention présente d'autres caractéristiques avantageuses selon lesquelles l'invention peut consister en un frein à tambour dans lequel les deux segments sont montés sur un plateau de façon à pouvoir s'écarter l'un de l'autre pour venir en appui sur la piste de frottement portée par l'intérieur d'un tambour mobile en rotation par rapport au plateau, l'actionneur linéaire étant agencé pour écarter les deux segments par leurs deux premières extrémités en vis-à-vis l'une de l'autre.

Dans un tel frein, selon une particularité, les deux segments sont articulés à une biellette mobile par rapport au plateau et qui les relie entre eux au voisinage de leurs deuxièmes extrémités, opposées aux premières extrémités, la biellette étant apte à transmettre de l'un des segments à l'autre des segments un effort qui pousse cet autre segment en appui contre un élément d'ancrage fixe par rapport au plateau.

Selon une autre particularité, le frein comprend en outre un deuxième actionneur assurant une deuxième fonction de freinage, notamment de service, ce deuxième actionneur étant agencé pour écarter l'une de l'autre les deuxièmes extrémités des deux segments tandis que les premières extrémités viennent en butée par rapport au plateau.

Enfin, selon un troisième aspect, l'invention consiste en un dispositif de freinage pour véhicule ou sous-ensemble de véhicule, notamment routier, comprenant un disque de frein interagissant avec des plaquettes de frein pour réaliser une deuxième fonction de freinage, notamment de frein de service, ce dispositif comprenant un frein agencé pour assurer une première fonction de freinage, notamment de frein de stationnement et/ou de secours, dans lequel le tambour est solidaire de, et coaxial avec, le disque de frein.

### Liste des figures

D'autres particularités et avantages de l'invention ressortiront de la description détaillée d'un mode de réalisation nullement limitatif et des dessins annexés sur lesquels :
- la FIGURE 1 est une vue en perspective d'un frein à tambour « bi-mode » dans un exemple de réalisation de l'invention représenté sans le tambour ;
- les FIGURES 2, 3 et 4 sont des schémas représentant, en vue de face, le fonctionnement du frein de la FIGURE 1 dans différentes positions lors du fonctionnement en frein de stationnement :
   ∘ FIGURE 2 : lors du serrage, véhicule immobile,
   ∘ FIGURE 3 : une fois serré, avec couple de maintien dans un sens de rotation, et
   ∘ FIGURE 4 : une fois serré, avec couple de maintien dans le sens opposé ;
- la FIGURE 5 est une vue éclatée partielle avant montage de l'actionneur de frein de stationnement ou de secours et du plateau support du frein de la FIGURE 1 ;
- la FIGURE 6 est une vue en perspective et écorché partiel de l'actionneur de frein de stationnement ou de secours pour le frein de la FIGURE 1, dans un exemple de réalisation à motorisation électrique ;
- les FIGURES 7 et 8 sont des vues éclatées de l'actionneur de frein de stationnement ou de secours de la FIGURE 6 ;
- la FIGURE 9 est une vue en perspective transparente de la transmission mécanique de l'actionneur de frein de stationnement ou de secours de la FIGURE 6 dans un mode de réalisation actuellement préféré.

### Description d'un exemple de mode de réalisation

Dans le mode de réalisation présenté ici, le frein à tambour 1 comprend l'actionneur linéaire 2 selon l'invention ainsi qu'un deuxième actionneur 11 qui permettent chacun un mode de fonctionnement différent. Ces deux modes de fonctionnement sont commandés pour fournir deux fonctions de freinage différentes.

Dans ce mode de réalisation, l'actionneur linéaire 2 selon l'invention est utilisé pour fournir une fonction de frein de stationnement et de secours, et le deuxième actionneur 11, par exemple un cylindre de roue hydraulique d'un type connu à deux pistons opposés, est utilisé pour fournir une fonction de frein de service.

Le frein à tambour 1 provoque un couple de freinage entre le tambour 15 et le plateau 10 mobiles en rotation l'un par rapport à l'autre autour d'un axe de rotation A1. Typiquement, le plateau 10 est fixé en rotation sur le châssis du véhicule, en général par l'intermédiaire d'un train ou d'un demi-train roulant suspendu. Le tambour est solidaire de la roue, et est fixé en translation et guidé en rotation autour de l'axe A1 par le moyeu et ses roulements, non représentés ici.

En mode frein de service (non illustré ici), le couple de freinage est généré par un frottement entre :
- d'une part, la piste de frottement portée par une surface intérieure du tambour 15,
- et d'autre part des garnitures de frottement 123, 133 portées respectivement par un premier 12 et un deuxième 13 segments.

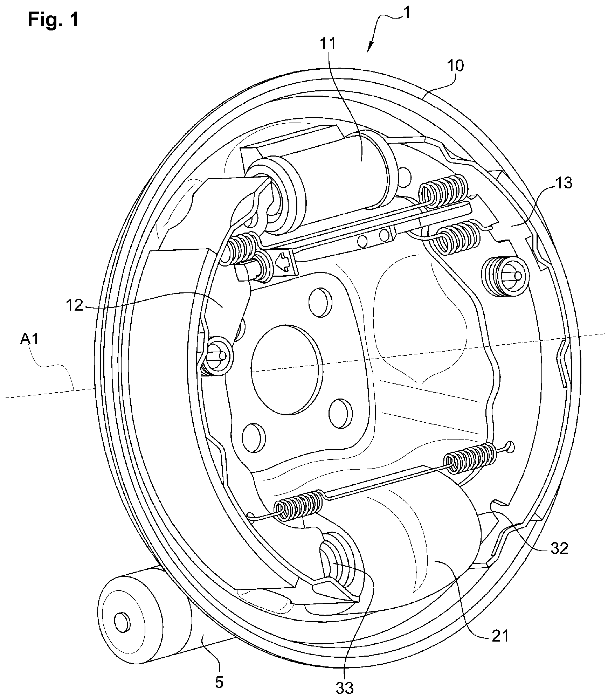

Ce frottement est obtenu lorsque le deuxième actionneur 11, fixé au plateau 10, écarte les segments vers l'extérieur. Le retour à la position de repos est réalisé par exemple par des ressorts de rappel, visibles en FIGURE 1, reliant entre eux les deux segments 12, 13.

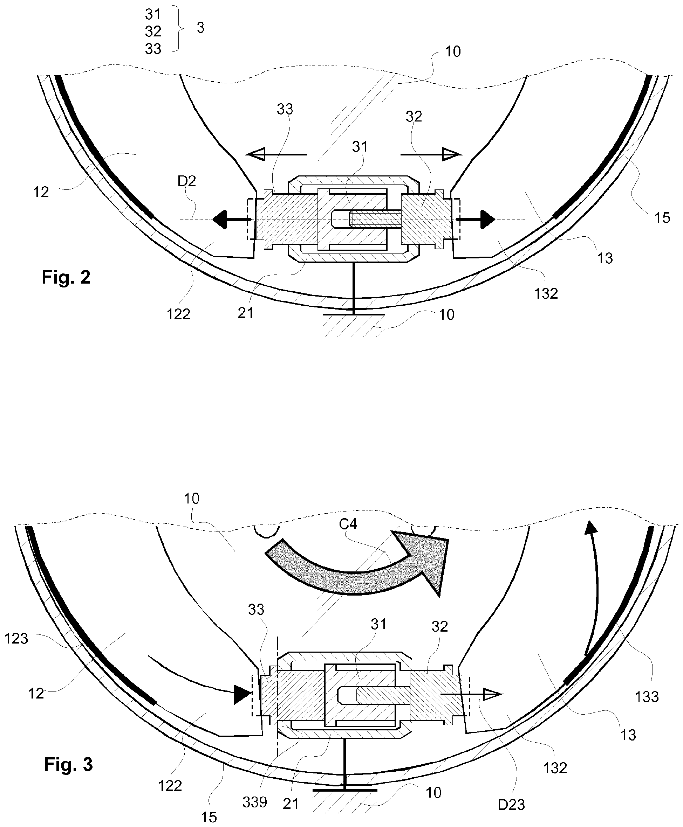

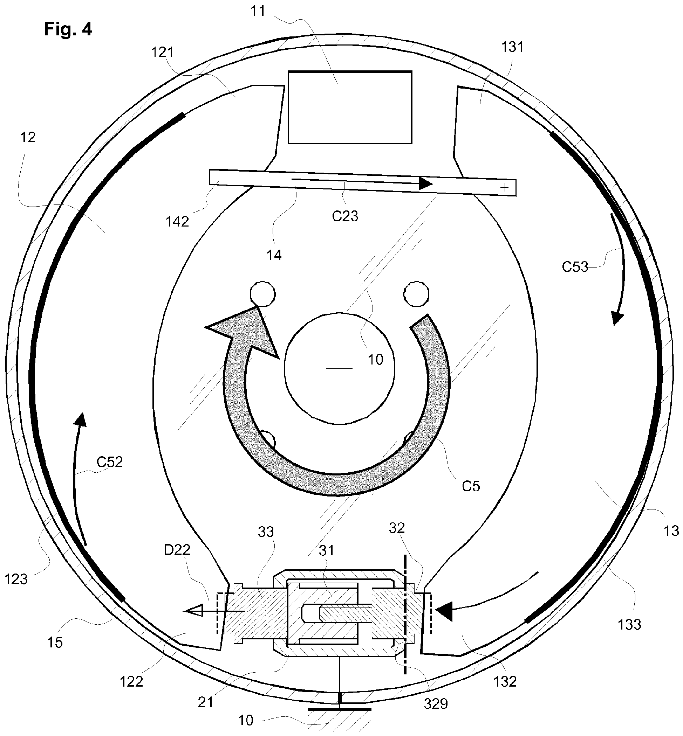

Dans cet exemple, le frein à tambour 1 est agencé pour fonctionner en mode simplex lorsqu'il est actionné en tant que frein de service : les deux pistons opposés du cylindre de roue actionnent chacun l'un des segments 12, 13 en écartant l'une de l'autre leurs deuxièmes extrémités en vis-à-vis 121, 131 situées en haut de la FIGURE 4. Aux extrémités opposées, dites premières extrémités 122, 132, chaque segment s'appuie sur un élément d'ancrage qui est solidaire du plateau et transmet au moins en partie le couple de freinage entre segment et plateau. Dans cet exemple, l'élément d'ancrage des deux segments est réalisé par un premier boîtier 21 de l'actionneur linéaire 2 par lequel celui-ci est solidaire du plateau 10. Cette fixation solidaire du premier boîtier 21 sur le plateau 10 est illustrée symboliquement en FIGURES 2 à 4 par le symbole de la terre, en bas et au milieu des figures.

Comme illustré en FIGURES 2 à 4, l'actionneur linéaire 2 selon l'invention, dédié au fonctionnement en frein de stationnement ou de secours, comprend un ensemble d'actionnement linéaire 3 qui appuie sur les premières extrémités 122, 132 des segments 12, 13 pour les écarter l'une de l'autre, et mettre ainsi les segments en appui contre la piste de frottement du tambour 15, à partir de la position de repos, ou de la position de freinage de service. Le retour à la position de repos est réalisé par exemple par des ressorts de rappel reliant entre eux les deux segments.

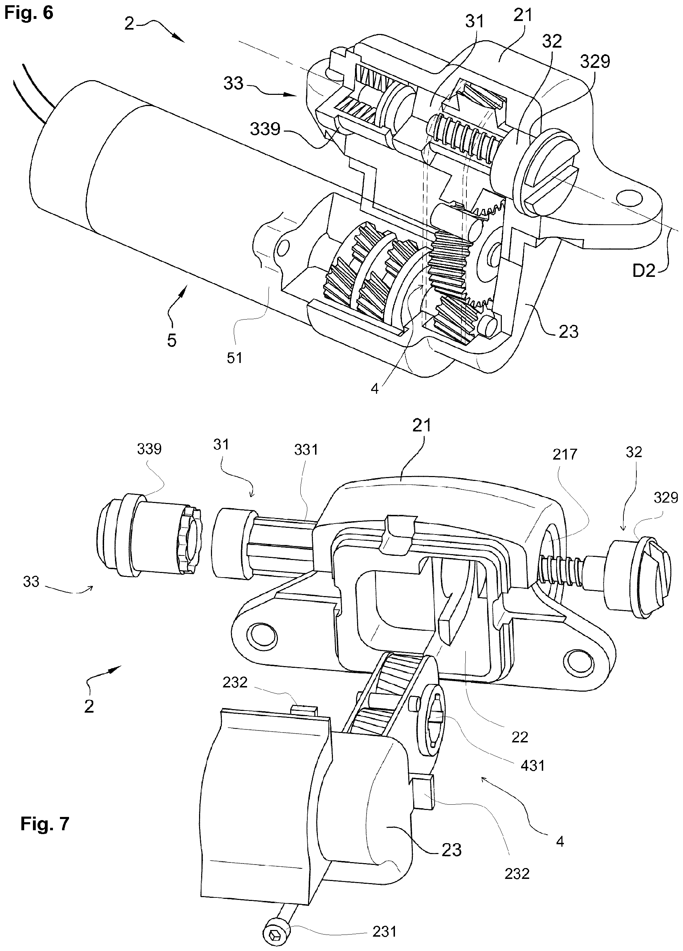

Les FIGURES 6 à 8 représentent l'actionneur linéaire 2 dans une version où il est entraîné par un moteur électrique inclus dans un motoréducteur 5, par l'intermédiaire d'un engrenage de transmission 4. Dans cet exemple, l'ensemble d'actionnement linéaire 3, réalisé par un système vis-écrou, inclut un premier piston 33 et un deuxième piston 32 qui sont déplacés l'un par rapport à l'autre en un mouvement linéaire, selon une direction D2 tangentielle à l'axe de rotation A1. Comme le montre la FIGURE 2, ce déplacement amène les deux pistons en appui respectivement sur les deux premières extrémités 122, 132 d'un premier segment 12 et d'un deuxième segment 13.

Dans le mode de réalisation de la FIGURE 1, l'ensemble d'actionnement linéaire 3 comprend un élément fileté 31 rotatif et un élément fileté 32 non rotatif interagissant entre eux pour former un système vis-écrou. Dans l'exemple représenté, l'élément fileté rotatif est un écrou et l'élément fileté non rotatif est une vis. Leur axe commun correspond à la direction d'actionnement D2. Ce système vis-écrou produit le mouvement linéaire sous l'effet d'une rotation de l'élément fileté rotatif 31 par rapport à l'élément fileté 32. Il transforme le couple reçu par l'élément rotatif 31 en une force axiale sollicitant les deux éléments 31, 32 l'un par rapport à l'autre selon la direction D2 (voir la FIGURE 2).

L'angle d'hélice du filetage par rapport à la direction circonférentielle de ce système vis-écrou est choisi pour que la transmission d'effort obtenue soit irréversible. Pour cela, l'angle d'hélice est choisi inférieur à l'angle de frottement ϕ qui caractérise la force résistant au mouvement de glissement entre les deux filetages en fonction notamment de leur matière respective, leur état de surface, le lubrifiant utilisé. L'irréversibilité ainsi obtenue fournit la fonction de blocage en position de freinage de stationnement. C'est-à-dire qu'un effort axial reçu par les pistons 32, 33 depuis les segments 13, 12 est bloqué par le non-glissement entre les filetages des deux éléments 31, 32 du système vis-écrou. Un tel effort est incapable de provoquer la rotation de l'élément rotatif 31 ni par conséquent une variation de la longueur totale du système vis-écrou selon la direction D2. En outre, l'effort n'est pas transmis jusqu'à la motorisation, rendant ainsi inutile de bloquer le moteur ou de le maintenir en charge.

Comme illustré en FIGURES 3 et 4, lors de l'appui des segments 12, 13 sur le tambour 15, si un couple de rotation, dans un sens C4 ou dans l'autre C5, est appliqué aux segments 12, 13 par le tambour 15, par exemple du fait que le véhicule est stationné dans une pente ou que le frein de secours est actionné lorsque le véhicule est en mouvement, les segments 12, 13 tendent à être entraînés en en rotation dans le sens de ce couple.

La FIGURE 4 illustre plus particulièrement le cas d'un couple C5 dans le sens horaire. Par frottement, le premier segment 12 reçoit ainsi un couple C52 de la part du tambour 15. Par sa deuxième extrémité 121, opposée à la première extrémité, le premier segment 12 prend appui sur un élément intercalaire 14 par une articulation 142, par exemple une liaison pivot ou toute autre coopération de formes comme des encoches engagées entre elles. Sous l'appui du premier segment 12, l'élément intercalaire 14 transmet ainsi un appui C23 à la deuxième extrémité 131 du deuxième segment 13, de façon sensiblement tangentielle autour de l'axe de rotation A1. Le deuxième segment 13 prend ainsi appui sur la piste du tambour 15, et reçoit lui aussi par frottement un couple C53 de la part du tambour. Par sa première extrémité 132, le deuxième segment transmet ce couple C53 au deuxième piston 32.

L'ensemble d'actionnement linéaire 3 est monté libre en translation tangentielle autour de l'axe de rotation A1, sur une course limitée par une butée de chaque côté de sa position centrale. Dans le sens de rotation de la FIGURE 4, sous l'effet des couples C52 et C53 reçus de la part du tambour 15, les segments ont ainsi pour effet de déplacer l'ensemble d'actionnement linéaire 3 dans le sens de ces couples, soit dans une direction D22 selon la flèche blanche vers la gauche et jusqu'à la position de butée illustrée sur la figure.

Ainsi, dans le mode de frein de stationnement ou de secours et avec ce sens de couple, la première extrémité 132 du deuxième segment 13 prend appui sur le boîtier 21 du dispositif d'actionnement pour transmettre au plateau 10 le couple de freinage ou de maintien créé par l'appui des segments sur le tambour.

Dans le présent exemple, la première extrémité 132 du deuxième segment 13 et le boîtier 21 de l'ensemble d'actionnement linéaire 3 prennent appui l'un sur l'autre par l'intermédiaire du deuxième piston 32, par exemple par une conformation appropriée, ici un épaulement 329 porté par le piston en vis-à-vis de la surface extérieure du boîtier 21 au niveau de la ligne verticale en trait mixte sur la figure.

Dans le sens de rotation visualisé à la FIGURE 4, le segment dont la première extrémité écartée 122 reçoit en premier le mouvement du tambour est le segment 12 à gauche sur la figure, qui pivote et s'arcboute sur le pivot 142 de sa deuxième extrémité et forme ainsi un segment « comprimé ». De façon proche, recevant ainsi un effort tangentiel par sa deuxième extrémité 131, le deuxième segment 13 se comporte lui aussi en segment « comprimé » en s'arcboutant sur sa première extrémité de butée 132.

Ainsi, en mode de frein de stationnement ou de secours, l'activation de l'actionneur linéaire 2 fait fonctionner le frein en mode duo-servo, qui fournit un effort d'appui contre le tambour beaucoup plus important que le mode simplex du frein de service, pour un effort d'actionnement donné des segments.

Dans le sens de rotation visualisé à la FIGURE 3, un couple C4 dans l'autre sens entraîne les segments 12, 13 et l'élément intercalaire 14 dans l'autre sens, ce qui déplace l'ensemble d'actionnement linéaire 3 dans une direction D23 opposée, selon la flèche blanche vers la droite et jusqu'à la position de butée illustrée sur la figure. Le couple de freinage est alors transmis au boîtier 21 par la première extrémité 122 du segment de gauche 12, par l'intermédiaire de l'épaulement 339 du premier piston 33, au niveau de la ligne verticale en trait mixte sur la figure.

Ce mécanisme de frein à tambour bi-mode est ici représenté en FIGURE 1 et 4 dans un exemple avec un deuxième actionneur 11 de frein de service fonctionnant par énergie hydraulique, et un actionneur linéaire 2 de frein de stationnement et de secours fonctionnant par énergie électrique. Cependant, l'architecture de ce mécanisme peut aussi fonctionner et est aussi prévue avec d'autres types d'énergie pour chacun de ces actionneurs, par exemple par énergie hydraulique ou directement par commande mécanique. En cas d'activation du deuxième actionneur hydraulique 11, les deux deuxièmes extrémités 121, 131 sont puissamment écartées l'une de l'autre tandis que les deux premières extrémités 122, 132 sont en appui sur le boîtier 21 par l'intermédiaire des épaulements des pistons 32, 33, l'ensemble d'actionnement linéaire 3 étant à l'été rétracté.

Dans le présent exemple, l'élément intercalaire 14, typiquement une biellette, porte aussi le mécanisme de rattrapage du jeu résultant de l'usure des garnitures 123, 133, comme illustré en FIGURE 1.

L'un des éléments de l'ensemble d'actionnement linéaire 3 est un élément 33 dit élément élastique, aussi appelé « spring package » en anglais, qui est déformable élastiquement par compression selon l'axe du mouvement d'actionnement. L'élément élastique, monté mécaniquement en série avec le système vis-écrou entre les deux premières extrémités 122, 132 des segments 12, 13, permet d'emmagasiner de l'énergie mécanique lors de l'activation de l'actionneur linéaire 2, pour maintenir l'effort de freinage ou absorber les déformations au cours des différentes circonstances pouvant survenir pendant la durée de l'immobilisation du véhicule.

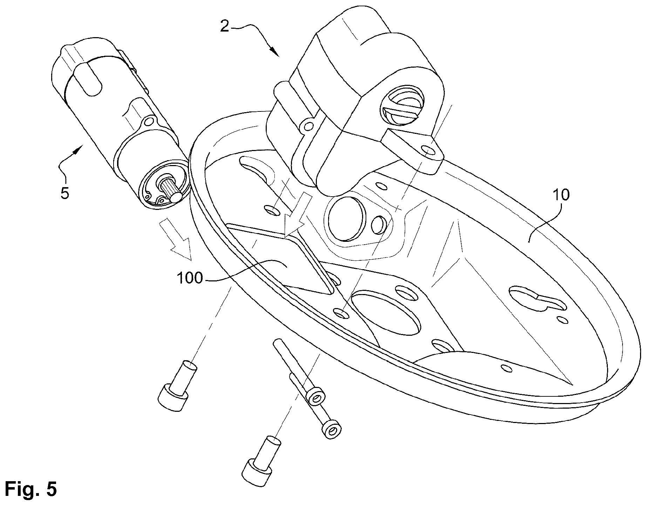

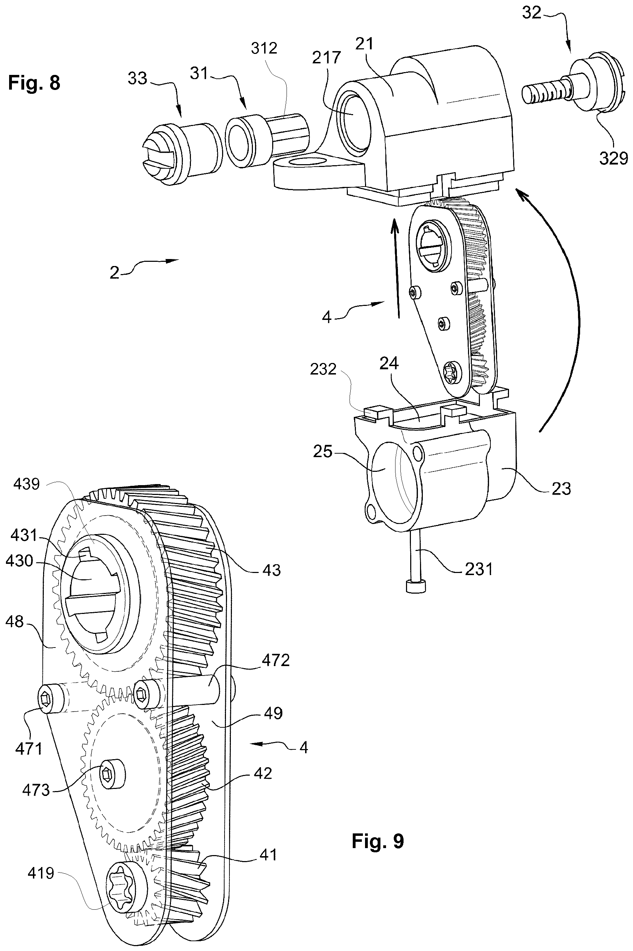

Dans le mode de réalisation des FIGURES 5 et 8, l'actionneur linéaire 2 comprend un premier boîtier 21 qui contient l'ensemble d'actionnement linéaire 3. Ce premier boîtier 21 est essentiellement situé à l'intérieur du tambour 15 et fixé sur une face avant ou intérieure du plateau 10. Le premier boîtier 21 est engagé dans une ouverture 100 du plateau 10 et ferme de façon sensiblement étanche l'ouverture 100 à l'égard de l'environnement extérieur du frein. Le premier boîtier 21 remplit aussi le rôle de butée transmettant le couple de freinage ou de maintien entre les segments 12, 13 et le plateau. Ce premier boîtier 21 est réalisé par exemple en métal moulé et usiné, par exemple en fonte d'aluminium. Un deuxième boîtier 23 adjacent à la face arrière ou extérieure du plateau 10 est accolé au premier boîtier 21 dans la zone entourée par l'ouverture 100. L'espace intérieur du deuxième boîtier 23 et un logement 22 du premier boîtier 21 communiquent entre eux à travers l'ouverture 100 en formant pour l'ensemble de transmission 4 un logement qui s'étend à travers l'ouverture 100. Ce logement est rendu sensiblement étanche vis-à-vis de l'extérieur par une ligne de joint annulaire entre les deux boîtiers sensiblement le long du pourtour de l'ouverture 100. Le motoréducteur 5 est fixé au deuxième boîtier 23 de façon que l'axe du motoréducteur 5 et la direction d'actionnement D2 (voir FIGURE 2) de l'ensemble d'actionnement linéaire 3 soient sensiblement parallèles.

Le logement 22 du premier boîtier 21 reçoit une partie du sous-ensemble de transmission 4 incluant la roue menée 43. Ce logement 22 intersecte le logement 217 formé par un alésage traversant le premier boîtier 21 et recevant l'ensemble d'actionnement 3.

Le deuxième boîtier 23 comprend un logement 24 qui reçoit la roue menante 41 du sous-ensemble de transmission 4. Le deuxième boîtier 23 présente des pattes 232 qui traversent l'ouverture 100 du plateau 10 et s'étendent entre le premier boîtier 21 et le plateau 10 pour y être serrées fortement lorsqu'ils sont fixés l'un à l'autre. L'assemblage préalable des deux boîtiers 21, 23, avant la fixation du premier boîtier 21 sur le plateau 10, ne nécessite ainsi que des moyens de fixation très simples, par exemple un simple encliquetage ou une unique vis 231 comme illustré en FIGURE 8.

Les parois des logements 22 et 24 des boîtiers 21, 23 présentent des rainures positionnées pour former un guidage en translation du sous-ensemble de transmission 4 lors de son insertion, par exemple en guidant des têtes d'entretoise et d'arbres des roues qui dépassent vers l'extérieur du sous-ensemble de transmission 4. Une fois le sous-ensemble de transmission 4 en place dans le premier boîtier 21, sa roue menée 43 est en place dans le logement 217 de l'ensemble d'actionnement linéaire 3, dont les éléments 31, 32, 33 peuvent alors y être insérés.

Le deuxième boîtier 23 est aussi muni d'un logement 25 qui reçoit l'arbre de sortie du motoréducteur 5, et sur lequel son boîtier 51 vient s'assembler de façon étanche et non rotative. Une fois le sous-ensemble de transmission 4 en place dans le logement 24 du deuxième boîtier 23, sa roue d'entrée 41 est en place dans ce logement 25 du motoréducteur dont l'arbre de sortie peut alors y être inséré.

Le mode de réalisation qui vient d'être décrit n'est nullement limitatif. En particulier, les éléments propres à l'actionneur linéaire 2 du frein de stationnement ou de secours peuvent être intégrés tels quels au sein de tout type de frein à tambour, notamment d'un frein à tambour mono-mode de type duo-servo utilisé seul, ou implanté en tant que frein de stationnement mono-mode au sein d'un frein à disque de type drum-in-hat.

Dans le mode de réalisation présenté à la FIGURE 9, le sous-ensemble de transmission 4 est un sous-ensemble pré-assemblé, dit cartouche d'engrenage, comprenant une carcasse qui supporte des roues 41, 42, 43, à denture hélicoïdale et à contact extérieur, et qui les maintient dans leur position de fonctionnement, indépendamment de leur environnement extérieur.

Le sous-ensemble pré-assemblé simplifie l'assemblage et la maintenance, et réduit les coûts de production. En outre, il garantit plus facilement et plus précisément une valeur optimale pour le positionnement relatif des roues dentées, en particulier leurs entraxes, en vue d'un rendement de transmission optimal.

Dans le présent exemple, la carcasse de la cartouche d'engrenage 4 comprend deux plaques 48, 49 parallèles et identiques, par exemple métalliques, maintenues entre elles par des pièces de liaison 471, 472, 473 formant entretoises. Celles-ci sont vissées, rivetées ou emmanchées dans les plaques.

Les roues dentées 41, 42, 43 sont maintenues entre les plaques 48, 49 et leurs arbres 419, 473, 439 sont positionnés dans des ouvertures ménagées dans les plaques en guise de paliers. L'arbre de certaines roues dentées, en particulier la ou les roues intermédiaires, ici l'arbre 473 de la roue intermédiaire 42, fait aussi office d'entretoise.

De façon caractéristique, la roue menée 43 de la cartouche d'engrenage 4 entraîne l'écrou rotatif 31 du système vis-écrou par un alésage axial 430 portant une forme intérieure 431, ici à cannelures, entourant l'écrou 31 et coopérant avec sa forme extérieure 312. La forme intérieure 431 de la roue menée 43 et la forme extérieure 312 de l'écrou 31 forment ensemble une liaison glissière libre en translation, et leurs géométries respectives sont déterminées pour autoriser un coulissement axial, selon la direction d'actionnement D2, d'une longueur suffisante pour permettre à l'ensemble d'actionnement linéaire 3 de coulisser complètement jusqu'à venir en butée d'un côté 329 ou de l'autre 339 selon le sens du couple de freinage ou de maintien à transmettre. Une telle configuration autorise un coulissement axial de l'écrou 31 par rapport à la roue 43 pendant la transmission de couple entre eux. Elle permet aussi le montage de l'ensemble d'actionnement linéaire par coulissement axial, tel que décrit plus haut, une fois la roue menée 43 en position adéquate dans le boîtier 21.

Dans un exemple de mise en œuvre de ce mode de réalisation, les dentures et dimensions de la cartouche d'engrenage ont été déterminées pour produire un rapport de réduction d'une valeur de 2,86:1 pour un rendement compris entre 0,89 et 0,94.

### Nomenclature

- 1: frein à tambour
- 10: plateau support
- 100: ouverture de plateau
- 12, 13: segments de freinage
- 121, 131: deuxièmes extrémités des segments
- 122, 132: premières extrémités des segments
- 123, 133: garnitures de frottement
- 14: élément intercalaire - biellette de rattrapage de jeu
- 142: articulation d'élément intercalaire
- 15: tambour de roue
- 11: deuxième actionneur - frein de service
- 2: actionneur linéaire - frein de stationnement ou de secours
- 21: premier boîtier d'actionneur linéaire
- 217: logement recevant l'ensemble d'actionnement linéaire
- 22: logement de la cartouche dans le premier boîtier
- 23: deuxième boîtier d'actionneur linéaire
- 231: vis de fixation du deuxième boîtier sur le premier boîtier
- 232: pattes de fixation du deuxième boîtier
- 24: logement de la cartouche dans le deuxième boîtier
- 25: logement de motoréducteur dans le deuxième boîtier
- 3: ensemble d'actionnement linéaire
- 31: écrou cannelé de système vis-écrou
- 312: cannelures externes de l'écrou
- 32: vis de système vis-écrou
- 329: épaulement d'appui de la vis - transmission du couple de freinage
- 33: piston élastique linéaire - "spring package"
- 339: épaulement d'appui du piston élastique - transmission du couple de freinage
- 4: sous-ensemble de transmission - cartouche d'engrenage
- 41: 1° roue dentée - roue menante
- 419, 439: arbres de 1° et 3° roues dentées
- 42: 2° roue dentée - roue intermédiaire
- 43: 3° roue dentée - roue menée
- 430: alésage axial de roue de sortie
- 431: cannelures intérieures de roue de sortie
- 471, 472: entretoises
- 473: arbre de 2° roue dentée - faisant entretoise
- 48, 49: plaques de maintien
- 5: motoréducteur
- 51: boîtier de motoréducteur

## Revendications

1. Actionneur linéaire (2) de frein à tambour (1) de véhicule, notamment automobile, comprenant:
- un ensemble d'actionnement linéaire (3) incluant un système vis-écrou formé par un élément fileté rotatif (31) et un deuxième élément fileté (32) d'actionnement linéaire, agencé pour actionner ledit frein à tambour en écartant l'une de l'autre des premières extrémités (122, 132) des segments de freinage (12, 13) selon une direction d'actionnement (D2), sous l'effet d'un entraînement en rotation dudit élément fileté rotatif vis-à-vis dudit deuxième élément fileté ;
- une motorisation rotative (5) ;
- un sous-ensemble de transmission (4) entraîné par ladite motorisation (5) et entraînant en rotation ledit élément fileté rotatif (31) par une liaison glissière selon ladite direction d'actionnement (D2),
en ce que le sous-ensemble de transmission (4) comprend des roues dentées (41, 42, 43) engrenées entre elles et montées pour recevoir le mouvement rotatif de la motorisation par une roue menante (41) et pour entraîner l'élément fileté rotatif par une roue menée (43) portant un alésage axial (430) qui entoure l'élément fileté rotatif (31), et **caractérisé**
**en ce que** ledit alésage porte, sur la surface intérieure de ladite roue de sortie, une forme d'entraînement intérieure (431) qui coopère avec une forme d'entraînement extérieure (312) portée par la surface extérieure dudit élément fileté rotatif pour entraîner ce dernier en rotation tout en autorisant entre eux un coulissement en translation selon la direction d'actionnement (D2).

2. Actionneur linéaire selon la revendication précédente, **caractérisé en ce que** l'ensemble d'actionnement linéaire (3) est renfermé dans un boîtier (21) dans lequel il est mobile en translation, selon la direction d'actionnement (D2), entre deux positions extrêmes dans chacune desquelles il vient en butée par appui d'un épaulement (329, 339) porté par ledit ensemble d'actionnement linéaire contre une surface portée par ledit boîtier.

3. Actionneur linéaire selon la revendication précédente, **caractérisé en ce que** les formes d'entraînement (312, 431) de l'élément fileté rotatif (31) et/ou de l'alésage de la roue menée (43) comprennent des cannelures.

4. Actionneur linéaire selon la revendication 3, **caractérisé en ce que** les formes d'entraînement (312, 431) de l'élément fileté rotatif (31) et/ou de l'alésage de la roue menée (43), et de préférence les deux, présentent une section transversale à la direction d'actionnement (D2) dont le profil s'amincit radialement, notamment de façon trapézoïdale de façon à exercer sur l'élément fileté rotatif (31) un effort de centrage dans l'alésage (430) lors de la transmission de couple.

5. Actionneur linéaire selon l'une quelconque des revendications précédentes, **caractérisé en ce que** l'élément fileté rotatif (31) forme l'écrou du système vis-écrou.

6. Actionneur linéaire selon l'une quelconque des revendications précédentes, **caractérisé en ce que** le sous-ensemble de transmission (4) comprend plusieurs roues dont les axes sont parallèles entre eux et à la direction d'actionnement (D2), et **en ce que** lesdites roues engrènent entre elles par des dentures à contacts extérieurs.

7. Actionneur linéaire selon l'une quelconque des revendications précédentes, **caractérisé en ce que** le sous-ensemble de transmission (4) forme un élément pré-assemblé au sein d'une carcasse comprenant deux plaques (48, 49) parallèles entre lesquelles sont maintenues les roues dentées (41, 42, 43), et qui portent des orifices circulaires accueillant des arbres (419, 473, 439) dépassant desdites roues dentées pour former des paliers les maintenant radialement en position.

8. Actionneur linéaire selon l'une quelconque des revendications précédentes, **caractérisé en ce qu'**il comprend :
- un premier boîtier (21), dit boîtier principal, recevant le système vis-écrou dans un logement d'actionnement (217), qui intersecte un logement (22) recevant une roue menée (43) située en sortie du sous-ensemble de transmission (4) et entraînant l'élément fileté rotatif (31) ; et
- un deuxième boîtier (23), dit boîtier secondaire, qui est assemblé avec ledit boîtier principal de façon à renfermer ledit sous-ensemble de transmission.

9. Actionneur linéaire selon l'une quelconque des revendications précédentes, **caractérisé en ce que** l'ensemble d'actionnement linéaire (3) comprend en série avec le système vis-écrou un élément (33) élastiquement déformable, au moins selon la direction d'actionnement (D2), sous l'effet d'un effort d'écartement appliqué aux segments (12, 13) par le système vis-écrou.

10. Frein à tambour (1) comprenant deux segments (12, 13) montés sur un plateau (10) de façon à pouvoir s'écarter l'un de l'autre pour venir en appui sur une piste de frottement portée par l'intérieur d'un tambour mobile en rotation par rapport audit plateau, **caractérisé en ce qu'**il comprend un actionneur linéaire (2) selon l'une quelconque des revendications précédentes agencé pour écarter l'une de l'autre deux premières extrémités (122, 132) desdits segments qui sont en vis-à-vis l'une de l'autre.

11. Frein selon la revendication précédente, **caractérisé en ce que** les deux segments (12, 13) sont articulés à une biellette (14) mobile par rapport au plateau et qui les relie entre eux au voisinage de leurs deuxièmes extrémités (121, 131), opposées aux premières extrémités, ladite biellette étant apte à transmettre de l'un (12) desdits segments à l'autre (13) desdits segments un effort qui pousse ledit autre segment (13) en appui contre un élément d'ancrage (21) fixe par rapport au plateau (10).

12. Frein selon la revendication 10 ou 11, **caractérisé en ce qu'**il comprend en outre un deuxième actionneur assurant une deuxième fonction de freinage, notamment de service (11), ledit deuxième actionneur étant agencé pour écarter l'une de l'autre les deuxièmes extrémités (121, 131) des deux segments (12, 13) tandis que les premières extrémités (122, 132) viennent en butée par rapport au plateau (10).

13. Dispositif de freinage pour véhicule ou sous-ensemble de véhicule, notamment routier, comprenant un disque de frein interagissant avec des plaquettes de frein pour réaliser une deuxième fonction de freinage, notamment de frein de service, **caractérisé en ce qu'**il comprend un frein selon la revendication 10 ou 11, agencé pour assurer une première fonction de freinage, notamment de frein de stationnement et/ou de secours, et **en ce que** son tambour est solidaire de, et coaxial avec, ledit disque de frein.

## Patentansprüche

1. Linearaktuator (2) einer Trommelbremse (1) für ein Fahrzeug, insbesondere für ein Kraftfahrzeug, umfassend:
- eine Linearbetätigungsanordnung (3), welche ein Schraubsystem enthält, das durch ein drehbares Gewindeteil (31) und ein zweites Gewindeteil (32) der Linearbetätigung gebildet wird und zum Stellen der Trommelbremse eingerichtet ist, wobei unter der Wirkung eines Drehantriebs des drehbaren Gewindeteils zum zweiten Gewindeteil erste Enden (122, 132) der Bremsbacken (12, 13) in einer Stellrichtung (D2) auseinander gespreizt werden;
- eine Drehmotorisierung (5);
- eine Übertragungsunteranordnung (4), welche durch die Motorisierung (5) angetrieben wird und das drehbare Gewindeteil (31) durch eine Gleitverbindung in der Stellrichtung (D2) drehantreibt,
dadurch, dass die Übertragungsunteranordnung (4) gezahnte Räder (41, 42, 43) umfasst, die miteinander in Eingriff kommen und angeordnet sind, die Drehbewegung der Motorisierung durch ein treibendes Rad (41) zu empfangen und das drehbare Gewindeteil durch ein eine um das drehbare Gewindeteil (31) herum gelagerte Axialbohrung (430) aufweisendes, getriebenes Rad (43) anzutreiben,
und **dadurch gekennzeichnet, dass** die Bohrung auf der Innenseite des Ausgangsrads eine Innenantriebsform (431) aufweist, die mit einer Außenantriebsform (312) zusammenwirkt, welche die Außenseite des drehbaren Gewindeteils aufweist, um jenes drehbare Gewindeteil in Drehbewegung anzutreiben und gleichzeitig untereinander eine verschiebende Gleitbewegung in der Stellrichtung (D2) zuzulassen.

2. Linearaktuator nach dem vorhergehenden Anspruch, **dadurch gekennzeichnet, dass** die Linearbetätigungsanordnung (3) in einem Gehäuse (21) eingeschlossen ist, in welchem er verschiebbeweglich in der Stellrichtung (D2) zwischen zwei Endpositionen ist, in welchen er jeweils durch Abstützen einer Schulter (329, 339), die die Linearbetätigungsanordnung aufweist, zum Anschlag gegen eine Fläche gebracht wird, die das Gehäuse aufweist.

3. Linearaktuator nach dem vorhergehenden Anspruch, **dadurch gekennzeichnet, dass** die Antriebsformen (312, 431) des drehbaren Gewindeteils (31) und/oder der Bohrung des getriebenen Rads (43) Furchungen umfassen.

4. Linearaktuator nach Anspruch 3, **dadurch gekennzeichnet, dass** die Antriebsformen (312, 431) des drehbaren Gewindeteils (31) und/oder der Bohrung des getriebenen Rads (43) und vorzugsweise beide einen quer zur Stellrichtung (D2) liegenden Abschnitt aufweisen, dessen Profil sich radial, insbesondere trapezförmig derart verjüngt, dass bei der Drehmomentübertragung auf dem drehbaren Gewindeteil (31) eine Zentrierkraft (430) in der Bohrung ausgeübt wird.

5. Linearaktuator nach einem der vorhergehenden Ansprüche, **dadurch gekennzeichnet, dass** das drehbare Gewindeteil (31) die Mutter des Schraubsystems bildet.

6. Linearaktuator nach einem der vorhergehenden Ansprüche, **dadurch gekennzeichnet, dass** die Übertragungsunteranordnung (4) mehrere Räder umfasst, deren Achsen unter einander und mit der Stellrichtung (D2) parallel verlaufen, und dadurch, dass die Räder durch Verzahnungen mit Außenkontaktstellen miteinander in Eingriff kommen.

7. Linearaktuator nach einem der vorhergehenden Ansprüche, **dadurch gekennzeichnet, dass** die Übertragungsunteranordnung (4) ein vorgefertigtes Element innerhalb eines Karosserieaufbaus bildet, welcher zwei parallel verlaufenden Platten (48, 49) umfasst, zwischen welchen die gezahnten Räder (41, 42, 43) gehalten werden und welche kreisförmige Öffnungen (419, 473, 439) aufweisen, die aus den Rädern herausragende Wellen aufnehmen, um Lager zu bilden, welche diese radial in Position halten.

8. Linearaktuator nach einem der vorhergehenden Ansprüche, **dadurch gekennzeichnet, dass** es umfasst:
- ein erstes Gehäuse (21), das sogenannte Hauptgehäuse, das das Schraubsystem in einer Betätigungsaufnahme (217) aufnimmt, das eine Aufnahme (22) kreuzt, welche ein getriebenes, am Ausgang der Übertragungsunteranordnung (4) gelagerte und das drehbare Gewindeteil (31) antreibende Rad (43) aufnimmt; und
- ein zweites Gehäuse (23), das sogenannte Nebengehäuse, das mit dem Hauptgehäuse derart zusammengebaut ist, sodass die Übertragungsunteranordnung eingeschlossen wird.

9. Linearaktuator nach einem der vorhergehenden Ansprüche, **dadurch gekennzeichnet, dass** die Linearbetätigungsanordnung (3) ein mit dem Schraubsystem im Reihenbetrieb angeordnetes Element (33) umfasst, das wenigstens in der Betätigungsrichtung (D2) unter der Wirkung einer durch das Schraubsystem an den Bremsbacken (12, 13) ausgeübten Spreizbeanspruchung elastisch verformbar ist.

10. Trommelbremse (1), zwei Bremsbacken (12, 13) umfassend, welche auf einer Bremsankerplatte (10) derart angeordnet sind, dass sie sich voneinander entfernen können, um sich auf einem Reibungsring abzustützen, welcher vom Inneren einer im Verhältnis zur Bremsankerplatte drehbeweglichen Trommel getragen wird, **dadurch gekennzeichnet, dass** sie einen Linearaktuator (2) nach einem der vorhergehenden Ansprüche umfasst, welcher derart eingerichtet ist, zwei ersten, sich gegenüberliegenden Enden (122, 132) der Bremsbacken auseinander zu spreizen.

11. Bremse nach dem vorhergehenden Anspruch, **dadurch gekennzeichnet, dass** die zwei Bremsbacken (12, 13) an einem Gestänge (14) beweglich gekoppelt sind, das im Verhältnis zur Bremsankerplatte beweglich angeordnet ist und sie untereinander in der Nähe ihrer zweiten, den ersten Enden gegenüber liegenden Enden (121, 131) verbindet, wobei das Gestänge geeignet ist, von einer (12) der Bremsbacken zur anderen (13) der Bremsbacken eine Beanspruchung zu übertragen, die die andere Bremsbacke (13) zur Abstützung gegen ein Ankerelement (21) drückt, das im Verhältnis zur Bremsankerplatte (10) fest ist.

12. Bremse nach Anspruch 10 oder 11, **dadurch gekennzeichnet, dass** sie außerdem einen zweiten Aktuator umfasst, welcher eine zweite Bremswirkung, insbesondere einer Betriebsbremse (11) gewährleistet, wobei der zweite Aktuator eingerichtet ist, die zweiten Enden (121, 131) der zwei Bremsbacken (12, 13) auseinander zu spreizen, während die ersten Enden (122, 132) gegenüber der Bremsankerplatte (10) in Anschlag kommen.

13. Bremsvorrichtung für ein Fahrzeug oder eine Unteranordnung eines Fahrzeugs, insbesondere eines Straßenfahrzeugs, umfassend eine Bremsscheibe, welche mit Bremsbelägen zur Ausführung einer zweiten Bremswirkung, insbesondere einer Betriebsbremse, in Wechselwirkung tritt, **dadurch gekennzeichnet, dass** sie eine Bremse nach Anspruch 10 oder 11 umfasst, welche zur Gewährleistung einer ersten Bremswirkung, insbesondere einer Parkbremse und/oder einer Notbremse eingerichtet ist, und dadurch, dass ihre Trommel mit der Bremsscheibe starr gekoppelt und koaxial zu ihr angeordnet ist.

## Claims

1. Linear actuator (2) for a drum brake (1) of a vehicle, in particular a motor vehicle, comprising:
- a linear actuator assembly (3) including a screw-and-nut system formed by a rotating threaded element (31) and a second threaded element (32) for linear actuation, arranged in order to actuate said drum brake by moving first ends (122, 132) of the brake shoes (12, 13) apart from each other in an actuation direction (D2), under the effect of said rotating threaded element being driven in rotation in relation to said second threaded element;
- a rotary drive (5);
- a transmission sub-assembly (4) driven by said drive (5) and driving said rotating threaded element (31) in rotation by means of a sliding connection in said actuation direction (D2),
in that the transmission sub-assembly (4) comprises gear wheels (41, 42, 43) meshed together and mounted in order to receive the rotational movement of the drive by means of a driving gear wheel (41) and in order to drive the rotating threaded element by means of a driven gear wheel (43) bearing an axial bore (430) that surrounds the rotating threaded element (31),
and **characterized in that** said bore bearing, on the inner surface of said output gear wheel, an internal drive form (431) that engages with an external drive form (312) borne by the outer surface of said rotating threaded element in order to drive the latter in rotation while permitting them to slide in translation with respect to each other in the actuation direction (D2).

2. Linear actuator according to the preceding claim, **characterized in that** the linear actuator assembly (3) is enclosed in a housing (21) in which it is mobile in translation, in the actuation direction (D2), between two end positions in each of which it is stopped by means of a shoulder (329, 339) borne by said linear actuator assembly pressing against a surface borne by said housing.

3. Linear actuator according to the preceding claim, **characterized in that** the drive forms (312, 431) of the rotating threaded element (31) and/or of the bore in the driven gear wheel (43) comprise splines.

4. Linear actuator according to claim 3, **characterized in that** the drive forms (312, 431) of the rotating threaded element (31) and/or of the bore in the driven gear wheel (43), and preferably both, have a cross-section transverse to the actuation direction (D2) the profile of which narrows radially, in particular in a trapezoid manner, so as to exert a force on the rotating threaded element (31) that centres it in the bore (430) during the transmission of torque.

5. Linear actuator according to any one of the preceding claims, **characterized in that** the rotating threaded element (31) forms the nut of the screw-and-nut system.

6. Linear actuator according to any one of the preceding claims, **characterized in that** the transmission sub-assembly (4) comprises several gear wheels the axes of which are parallel to each other and to the actuation direction (D2), and **in that** said gear wheels mesh with each other by means of external teeth.

7. Linear actuator according to any one of the preceding claims, **characterized in that** the transmission sub-assembly (4) forms a preassembled element inside a casing comprising two parallel plates (48, 49) between which the gear wheels (41, 42, 43) are held, and which have circular orifices receiving shafts (419, 473, 439) extending from said gear wheels to form bearings that hold them radially in position.

8. Linear actuator according to any one of the preceding claims, **characterized in that** it comprises:
- a first housing (21), called the main housing, receiving the screw-and-nut system in an actuator recess (217), which intersects a recess (22) receiving a driven gear wheel (43) situated at the output of the transmission sub-assembly (4) and driving the rotating threaded element (31); and
- a second housing (23), called the secondary housing, which is assembled with said main housing so as to enclose said transmission sub-assembly.

9. Linear actuator according to any one of the preceding claims, **characterized in that** the linear actuator assembly (3) comprises, in series with the screw-and-nut system, an element (33) that is elastically deformable, at least in the actuation direction (D2), under the effect of a separation force applied to the shoes (12, 13) by the screw-and-nut system.

10. Drum brake (1) comprising two shoes (12, 13) mounted on a backing plate (10) so as to be able to be moved apart from each other to press on a braking surface borne by the inside of a drum mobile in rotation with respect to said backing plate, **characterized in that** it comprises a linear actuator (2) according to any one of the preceding claims, arranged in order to move apart from each other two first ends (122, 132) of said shoes, which are facing each other.

11. Brake according to the preceding claim, **characterized in that** the two shoes (12, 13) are articulated on a rod (14) that is mobile with respect to the backing plate and connects them to each other in the vicinity of their second ends (121, 131), opposite the first ends, said rod being capable of transmitting from one shoe (12) to the other (13) a force that pushes said other shoe (13) against an anchor (21) that is fixed with respect to the backing plate (10).

12. Brake according to claim 10 or 11, **characterized in that** it also comprises a second actuator providing a second braking function, in particular service braking (11), said second actuator being arranged in order to move the second ends (121, 131) of the two shoes (12, 13) apart from each other while the first ends (122, 132) abut against the backing plate (10).

13. Braking device for a vehicle or vehicle sub-assembly, in particular a road vehicle, comprising a brake disc interacting with brake pads in order to carry out a second braking function, in particular service braking, **characterized in that** it comprises a brake according to claim 10 or 11, arranged in order to provide a first braking function, in particular parking and/or emergency braking, and **in that** the drum thereof is firmly fixed to and coaxial with said brake disc.
